(19) Europäisches Patentamt
European Patent Office
Office européen des brevets

(11) Publication number: **0 246 711 A2**

(12) **EUROPEAN PATENT APPLICATION**

(21) Application number: 87200960.0

(22) Date of filing: 21.05.87

(51) Int.Cl.³: G 01 S 15/89
B 07 C 5/12, G 07 F 7/06
G 10 K 11/28

(30) Priority: 22.05.86 NL 8601309

(43) Date of publication of application:
25.11.87 Bulletin 87/48

(84) Designated Contracting States:
AT BE CH DE ES FR GB GR IT LI LU NL

(71) Applicant: INFA B.V.
Populierstraat 22
NL-5271 NX St. Michielsgestel(NL)

(72) Inventor: Lauw, Tjing Han
Lupine 40
NL-2925 ET Krimpen a/d Ijsel(NL)

(74) Representative: Mommaerts, Johan Hendrik, Dipl.-Phys.
Octrooibureau Lux Willem Witsenplein 4
NL-2596 BK Den Haag(NL)

(54) **A device for recognising the shape and dimension of bottles or the like.**

(57) A device for recognizing the shape of objects such as bottles (6), in particular in view of refunding deposit money, comprising means for supporting an object to be examined (6), a transmitter and a receiver (1) for directing a measurement beam towards the object (6) to be examined and receiving said beam (2) respectively, after having hit said object (6), means for mutually displacing the transmitters and/or receivers and the object (6), so as to scan said object (6) in the longitudinal direction, and means for processing the measurement signals supplied by the receiver, comprised one or more transmitters (1) for emitting a beam (2) of ultrasonic pulses towards a point near the axial plane of an object (6) to be examined, one or more receivers (1) for the pulses reflected against this object (6), means for moving the or each transmitter and receiver (1) or said object (6), parallel to the direction of the said object (6), and by processing means which are adapted to determine transit time differences between the transmitted and corresponding received pulses, and for deriving therefrom the distance of said object (6) in respect of the transmitter (1), as well as for comparing said distance with comparison values, and deriving therefrom the shape and dimensions of the examined object (6).

27
1/16
22
26
25
25
17'
24
21
35
18'
9'
23
6
17'
39
28
40
38
37
29
36
34
32
31
33
30
19

FIG: 7B.

FIG: 7A.

EP 0 246 711 A2

Croydon Printing Company Ltd.

0246711

# A device for recognizing the shape and dimensions of bottles or the like.

For recognizing bottles or the like, in particular in view of refunding deposit money in supermarkets, automatically operating devices are known, allowing to determine the peripheral shape and size of a bottle.

In a device known from NL-A 76 05910 for this purpose, a narrow light beam is repeatedly swept in the axial direction of the bottle during conveying the bottle, e.g. by means of a rotating disk, which beam, if not interrupted by the bottle, will hit a row of light-sensitive cells directed parallel to the axial direction of the bottle, and this, if required, by means of an optical fibre assembly, which is repeated for a number of intersection planes of the bottle during the passage of said bottle.

The output signals series of these cells represent, then, the peripheral shape of the bottle, which signal series are subsequently compared with reference series valid for acceptable bottles. In the case of correspondence, the bottle is carried off and a credit coupon is produced.

These known devices have some disadvantages. Such devices are to be included in a wall between the shop and the storage space, so that these devices are generally installed in a part of the shop in which also the goods are present, so that it is possible to take away filled bottles from the shop and to place them into the device with the aim of cashing the deposit money. Moreover the purchase price of such devices is high, and said devices are sensitive to failures. Placing the bottles on a rotating disc is for many people objectionable, and toppling bottles are refused which delays the operation. Moreover the accepted bottles are generally shifted from the disc on a table which, if no additional expensive discharge means are provided, is to be emptied in time so as to avoid congestion.

It is an object of the invention to provide a device of this kind which does not have these draw-backs. To that

and the device of the invention is characterised by one or more transmitters for emitting a beam of ultrasonic pulses towards a point near the axial plane of an object to be examined, by one or more corresponding receivers for the pulses reflected by said object, by means for moving said transmitters and receivers or the object, as the case may be, parallel to the axis of said object, and by processing means adapted to determine the transit time differences between the emitted and corresponding received pulses, and to derive therefrom the distance of said object in respect of the transmitter, and for comparing said differences with reference values and deriving therefrom the shape and dimensions of the examined object. In particular a transmitter and a corresponding receiver are formed by the same electro-acoustic transducer.

Whereas the above-mentioned known devices for recognizing bottles operate with light rays and shadow effect, and for each bottle a number of cross-sections are to be determined, the device of the invention operates with depth or distance measurement by means of ultrasonics in one single passage. Ultrasonic transmitters and receivers are more robust and less sensitive to failures than the laser sources used in the known devices, and by the depth measurement in one passage a sufficiently sharp shape determination can be obtained, so that the operation is faster. Moreover such ultrasonic devices are less expensive than the known ones. In particular the receiver can be formed by the same element as the transmitter.

Since the ultrasonic beam leaving the transmitter is somewhat conical, it will be clear that the beam reflected against a substantial flat surface portion perpendicular to the beam will diverge still further, so that, if the receiver has the same aperture as the transmitter, the receiver will receive less acoustic energy accordingly. At a small angular deviation of said surface this will, for the rest, not change. At a larger angular deviation, when the reflected beam does no longer completely cover the receiver surface, the received energy will be reduced in a considerable degree.

This holds, in particular, for the transition between the body and the neck of a bottle or for curved or constricted bottle walls, where the reflected beam can obtain such an angular deflection that the radiation energy incident on the receiver becomes too weak for obtaining a correct distance measurement and,thus, shape determination. Therefore it can be favourable to arrange the axis of one or more transmitters/receivers at such an angle that in such transition surfaces a sufficient reception of the reflected beam can still be obtained. If, however, oppositely inclined surfaces occur, or the bottles can be placed in two opposite positions, it is advisable to use transmitters/receivers which include substantially opposite angles with the axis of the object, and then the processing means are to be adapted to process the signals of the different receivers.

Further embodiments of the device according to the invention are specified in de sub-claims.

The invention will be elucidated below in more detail by reference to a drawing, showing in:

Fig. 1 a diagrammatic representation for elucidating the principles on which the device of the invention is based;

Figs. 2 and 3 diagrammatic representations of two embodiments of a device of the invention for recognizing bottles;

Figs. 4A, B and C different embodiments of transmitter/receiver-assemblies for such a device;

Fig. 5 a diagrammatic representation in perspective of a practical embodiment of a parabolic mirror for such an assembly and its position in respect of a bottle to be examined;

Fig. 6 a diagrammatic cross-section of a device of the invention; and

Fig. 7 a particular embodiment of the device of Fig. 6.

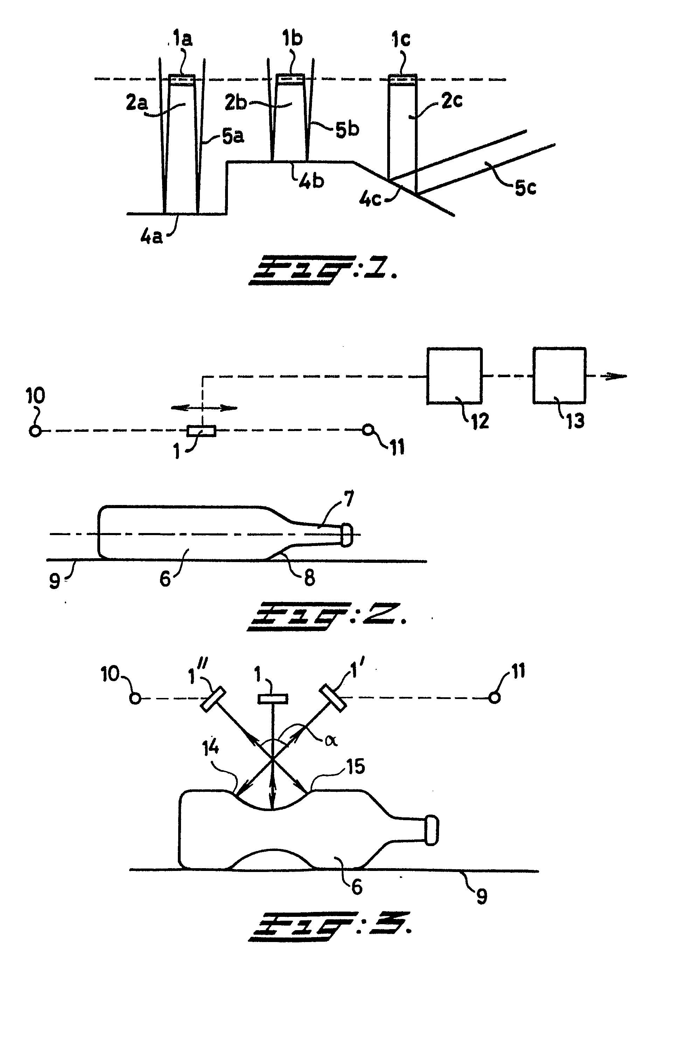

In Fig. 1 an ultrasonic transmitter 1 is diagrammatically shown, which, in particular, can also operate as a receiver, said transmitter being adapted for emitting successive ultrasonic pulses as a conical beam 2. Said transmitter is movable along a horizontal path 3, three positions A, B and C thereof being shown.

In front of the transmitter/receiver 1 a surface 4 including two parts 4A and 4B parallel to the path 3 and having different distances in respect of the path 3, as well as an oblique portion 4C are shown. The beams 2A and 2B are reflected as diverging beams 5A and 5B resp. against these surface portions 4A and 4B resp., and a portion thereof is incident again on the transmitter/receiver 1,and this at an instant that depends on the transit time of the sound over two times the distance between the transmitter/receiver and the surface portion in question.

The time interval between a received pulse and the corresponding emitted pulse is a measure for the distance of the surface portion in question to the transmitter/receiver. This time interval can be measured with known electronic apparatuses, and can, in particular, be compared with reference values for known distances.

The energy taken up by the receiver is smaller than the emitted energy. The output pulses of the receiver corresponding to the reflected pulses are, therefore weaker than the output pulses corresponding to the transmitter pulses, and are, therefore, clearly distinct therefrom.The processing circuit of the device should, of course, be adapted to process these weaker signals.

If the surface 4, as shown at 4c, has an inclination, the beam 5c, if the inclination angle thereof exceeds a given value, will, on reception by the receiver 1c,be weakened in energy so that a considerably weakened signal or no signal at all is received.

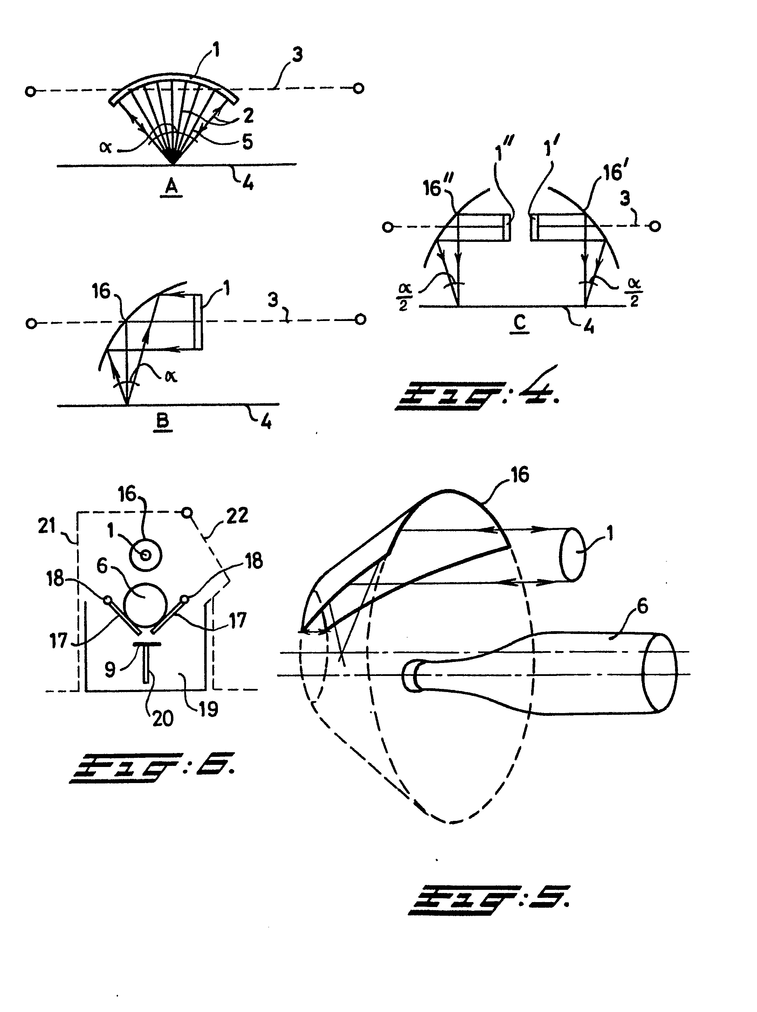

Fig. 2 diagrammatically shows how, in this manner, the shape and dimensions of a bottle 6 having a neck 7 and a transition portion 8 between said neck 7 and the body of the bottle can be determined.

Said bottle 6 is supported parallel to the path 3 of the transmitter/receiver 1, and in particular horizontally, on a support 9. The path 3 extends between two terminal points 10 and 11, which are so far apart that the largest prevailing bottles still can be covered.

The pulse series produced by the receiver and consisting of a plurality of pairs of output pulses corresponding to the transmitted acoustical pulse and the received reflected acoustical pulses respectively, is sent to a processing circuit 12 known per se, in which said output pulses are processed to produce corresponding transit time differences corresponding to the distances in question, which are, then, compared in a comparator 13 with corresponding reference series which have been determined for acceptable bottle shapes and dimensions. In the case of correspondence the bottle is accepted. Such processing circuits are known per se, and have, therefore, not to be described in detail.

In the transition portion 8 only a measurement takes place in those parts having an inclination lying below the threshold value mentioned above. The length of the bottles is derived from the beginning and the end of the measurement series proper where the beam is reflected against the support 9.

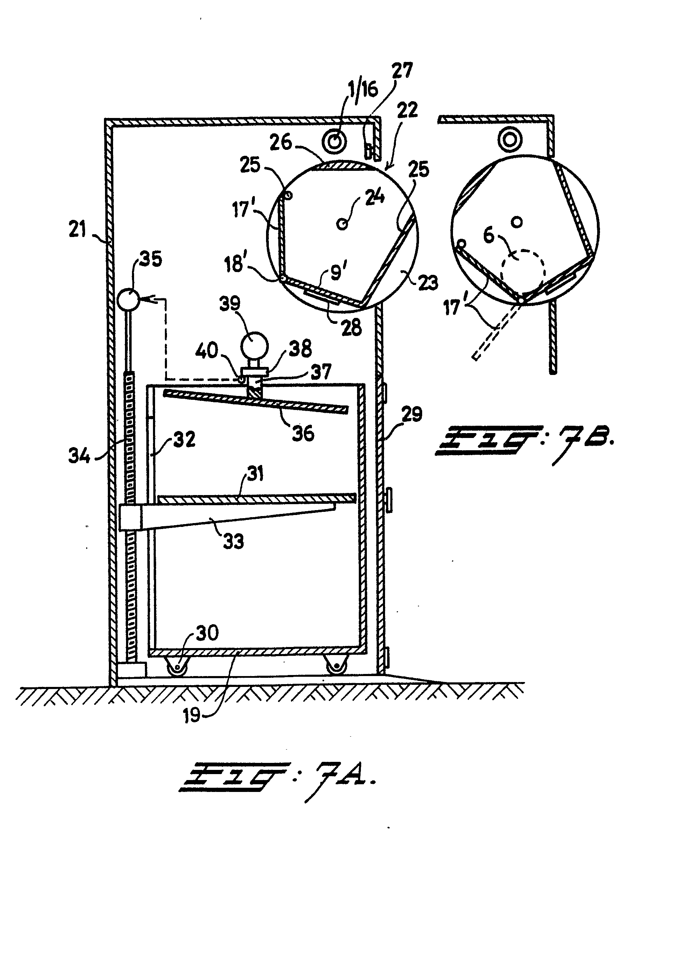

Fig. 3 shows a bottle 6 having, moreover, a constriction which, if the inclination of the transition portions 14 and 15 is large, cannot be accurately followed. If a more precise determination of the shape is important for recognizing unacceptable bottles, two or more transmitters/receivers 1, 1', 1" can be used which are directed at different angles in respect of the axis of the bottle, the transmitters/receivers 1' and 1" having opposite inclinations. These angles are chosen in such a manner that the beam reflected against the parallel wall portions sufficiently reaches the receiver, and always one of the receivers will receive from an inclined surface a sufficient signal. For instance the receiver 1' will receive the beam reflected against the surface portion 14, and the receiver 1" the beam reflected against the portion 15.

When the transmitters/receivers 1' and 1" are, as shown, mutually displaced in the direction of movement, a corresponding time delay will occur in the signal series, but this is not important since, eventually, only time differences between the transmitter- and receiver pulses should be determined.

In the case of an inclined surface only one of the receivers 1 will produce a usable signal, so that only this signal will be processed. On the straight surfaces both series will mutually be equal. Of course this should be realised when adjusting the device.

The effect of several transducers radiating under different angles towards the object, and, thereby, allow a larger inclination of the surfaces in question (aperture angle $\alpha$), can also be obtained by using a concave radiation surface. This can be obtained in different ways, as shown in Fig. 4.

According to Fig. 4A a transducer is used having a surface which is curved in such a manner that the transmitted acoustic beam is incident on the reflecting object convergently from different angles of incidence with an aperture angle $\alpha$. It is also possible to use concave and in particular parabolic mirrors 16 by means of which a convergent beam is obtained which is incident under different angles as shown in Figs. 4B and 4C. In the case of Fig. 4B the mirror 16 produces a beam with an aperture angle $\alpha$, and in Fig. 4C two mirrors 16' and 16" being associated with a transducer 1' and 1" respectively, produce a beam with an aperture angle $\alpha/2$. The latter case corresponds to the case of Fig. 3, but now the task of the transducer 1 has been spread over both transducers 1' and 1".

When using such mirrors 16, the latter should, of course move with the associated transducers 1 if the latter are moved along an object to be examined. It is, then, not necessary that the different beams will be directed to the same point of the bottle surface, provided that the deviation from the axial plane is not too large.

Fig. 5 shows how a parabolic mirror according to Fig. 4B or C can be a part of a paraboloidical ring having an axis which substantial coincides with the axis of a bottle to be examined. Such mirrors can, for instance, be cut from a ring of plastics or an other suitable material formed on a template, or can be made directly by means of moulds produced by using such a template.

Fig. 6 shows a diagrammatic representation in section of a device according to the invention.

The support 9 having the shape of plates 17 arranged in the manner of a V will accurately centre a bottle irrespective its diameter, which also holds for square bottles. Inserting a bottle into such a support is easy, and all difficulties rising from an inaccurate positioning are avoided.

The plates 17 are, in particular, mounted on hinges 18, and are being maintained in the position shown by means of locking elements not shown, said locking elements being released on the reception of an acceptance signal of the final stage 13, and then the bottle 6 can drop into a collecting bin 19. Said collecting bin can, in particular, be provided with a central partition 20 if the acceptance signals make a distinction between larger and smaller bottles, and, with the locking elements, the plates 17 can be operated separately, so that larger bottles will drop in one and smaller ones in the other bin half. After a bottle has dropped out the plates can be rotated back by means of a motor or the like.

The bin 19 is, in particular, freely arranged in a housing as indicated diagrammatically, said housing being adapted to be placed in an arbitrary point, and in particular outside the restricted sales area. Means can be provided for indicating that the bin 19 is getting full, so as to allow to produce a warning signal in time. It is, of course, also possible to discharge the bottles continuously by means of a conveyor, chute or the like. Moreover, in the casing 21 a door 22 is provided for closing the intake space for the bottles, which door can be provided in the known manner with electric contacts preventing the operation of the device as long as the door is open, said door being locked as long as the device is operative.

Fig. 7 shows a diagrammatic representation of a practical embodiment of a device according to the invention. This device comprises a casing 21 with, at its front side, an opening 22. Therein a substantially cylindric at body 23 is arranged which is rotatable around an axis 24, which not necessarily coincides with the cylinder axis. Within this body a plurality of walls are provided extending over the width of the opening 22, viz. a closing wall 25, and two contiguous walls 9' and 17' arranged at an angle, the latter forming the bottle support during the examination thereof by means of the assembly 1/16. Said walls 9' and 17' essentially correspond to the parts 9 and 17 of Fig. 6. The wall 17' is connected by means of a hinge 18' with the wall 9', and is, in the condition of rest according to Fig. 7A, retained by means of a latch 25. A shielding wall 26 shields in the condition of rest shown in Fig. 7A the assembly 1,16. The latter wall can be a part of the cylindric body 23, but can also be a separately movable wall which is coupled to said cylinder 23 in some suitable manner.

After inserting a bottle the user rotates the cylinder 23 towards the position shown in Fig. 7B, in which position the cylinder is locked by means of a latch 27. The bottle 6 is then supported by the walls 9' and 17'. Means 28 which are diagrammatically shown can be provided for determining the weight of the bottle is this is desired. At a deviating weight the bottle can be refused. After examining the bottle 6, the latch 25 is released allowing the wall 17' to turn down as shown in Fig. 7B by interrupted lines, after which the latch 27 is released, so that the cylinder 23 will return again to the initial position. Coupling or guiding means not shown are provided for turning the wall 17' back again during this reverse rotation, and to engage said wall with the latch 25. If the examination leads to a refusal of the bottle, the latch 25 is not released which is only the case for the latch 27, so that, then, the body 23 with the bottle will return to the initial position, after which the bottle can be taken away again.

Furthermore the casing 21 comprises a door 29 through which a separate bin 19 on wheels 30 can be rolled inwards. This bin consists, for instance, of a rigid frame made of channel rods between which wire grid is provided. This bin has a movable bottom 31, which can be shifted within said bin, and the back wall thereof is provided with slots 32 through which lifting arms 33 can be inserted which are to be engaged with the lower side of the bottom 31. Said arms 33 can be moved up and down by means of associated screw spindles 34 coupled with a motor 35.

When introducing an empty bin 19, the arms 33 are in their lowest position so that they can be placed below the bottom. Thereafter the motor 35 is switched on in order to move said bottom towards its highest position. Bottles rolling from the cylinder 23 when turning the wall 17' will fall, then, into the bin over the smallest possible height. As the bin is being filled, the arms 33 are moved downwards so as to maintain a substantially constant fall height for the bottles so as to reduce the danger of being damaged.

Fig. 7A shows a special auxiliary means for uniformly distributing the bottles in the bin and for controlling the lifting arms 33. To that end a disc 36 is provided at the upper side of the bin which is connected to a vertical driving shaft 37 at a small inclination with the horizontal plane.

This shaft is coupled, by means of a slipping clutch 38, with a driving motor 39. The bottles will, now, fall first on the disc 36, and roll, because of the slight inclination thereof, from the disc into the bin 19, but, since this disc and also the line of largest inclination thereof is rotating, the bottles will be uniformly distributed over the bin 19.

As soon as the stack of bottles on the bottom 31 becomes so high that the disc 36 is being arrested thereby, the clutch 38 begins to slip. This is detected by a sensor 40 which, then, switches on the motor 35 so as to lower the arms 33 over a given distance, after which the bottles can be distributed again by the disc 30. This continues until the bin 19 is completely filled. Then a warning signal is produced, and the operation of the device is interrupted until a new bin has been inserted.

This device comprises, of course, the current means for supplying credit coupons, and, moreover, preferably comprises means for printing a list of bottles introduced into the bin, which print can be attached, either or not automatically, to a filled bin 19.

If the cover wall 26 is not mounted on the cylinder itself, it can be mounted on separate swing arms which are coupled to the cylinder 23 by means of a pin/slot coupling, and this in such a manner that, when rotating said cylinder inwards, said wall is swung away.

The axis of the cylinder 23 can be situated so much lower than its axis of rotation 24 that this cylinder will automatically return to the position of Fig. 7A under the influence of gravity, but it is also possible to use springs to that end. It is also possible to use the position of Fig. 7B as the position of rest, so that, then, the cylinder 23 should be rotated for inserting or removing a bottle.

It will be clear that the supports for the bottles and the closing means for the opening 22 can be constructed in many other ways.

The means 28 for weight determination can be left out if an additional protection against inserting full bottles is not required. However such means can be required if accepting too light plastics bottles having the shape of an acceptable bottle, and/or retracting a bottle after measurement by means of a string or the like, should be avoided.

A specific advantage of the device described above is that, in one single passage of a transmitter/receiver, an accurate determination of the shape and dimensions of a bottle or similar liquid container can be obtained, so that the operation is very fast. In particular the transmitter/receiver will be moved alternately in the one or the other sense so as to avoid delays. Said movement can take place contiuously or stepwise by means of a driving belt or screw or the like.

Claims

1. A device for recognizing the shape of objects such as bottles, in particular in view of refunding deposit money, comprising means for supporting the object to be examined, a transmitter and a receiver for directing a measurement beam towards the object to be examined and , respectively receiving said beam after having hit said object, means for mutually displacing the transmitters and/or receivers and the object, so as to scan said object in the longitudinal direction, and means for processing the measurement signals supplied by the receiver, characterised by one or more transmitters for emitting a beam of ultrasonic pulses towards a point near the axial plane of an object to be examined, by one or more receivers for the pulses reflected against this object, by means for moving the or each transmitter and receiver or said object parallel to the direction of the axis of said object, and by processing means which are adapted to determine transit time differences between the transmitted and corresponding received pulses, and for deriving therefrom the distance of said object in respect of the transmitter, as well as for comparing said distance with comparison values and deriving therefrom the shape and dimensions of the examined object.

2. The device of claim 1, characterised in that the axis of a transmitter (1', 1") is directed at such an angle that in the case of surfaces (8, 14, 15) having an inclination in respect of the axis of the object (6) to be examined still a sufficient reception of the reflected beam is obtained.

3. The device of claim 2, characterised by additional transmitters/receivers including substantially opposite angles with the axis of the object (6) to be examined, the processing means (12, 13) being adapted to process the signals of different receivers (1, 1', 1").

4. The device of any one of claims 1..3, characterised by an imaging system, in particular parabolic concave mirrors (16, 16', 16") by means of which a beam can be concentrated towards a point on or near an object (6. to be examined.

5. The device of any one of claims 1..4, characterised in that the object (6) to be examined is horizontally supported, the support (9, 17) having a V-shape cross-section.

6. The device of any one of claims 1..5, characterised in that the support (6, 17) is provided with means (28) for determining the weight of an object (6).

7. The device of claim 5 or 6, characterised in that at least one of the walls (17, 17') of the support can be turned away as soon as, after accepting said object (6), a signal is received from the processing means (12, 13), after which the object (6) can roll towards a lower collecting bin (19).

8. The device of any one of claims 5..7, characterised in that the support is a part of a rotatable flap assembly (23) adapted to close an aperture (22) in the wall of a casing (21) of the device, which, in one position, opens the passage towards the support (9', 17'), and can be latched (27) in the other position, and, then, releases the object (6) for examination, said latching (27) being released after completing the examination.

9. The device of claim 7 or 8, characterised in that the collecting bin (19) is a loose collecting bin adapted to be removed from the device and provided with a bottom (31) which is movable in a horizontal position within said bin, lifting forks (33) being adapted to engage said bottom, said forks being adapted to be moved up and down by means of a drive (34, 35), and in that means are provided by means of which, starting from a highest position of said bottom (31), exceeding a given degree of filling of the bin (19) can be detected, and by means of which the fork drive (35) can be switched on for lowering the bottom (31) over a given distance until the lowest position has been reached.

10. The device of claim 9, characterised in that below the object support (9, 9', 17, 17') a rotatable disc (36) with a vertical rotatable shaft (37) is arranged, said disc (36) including a small angle with the horizontal plane, said shaft (37) being connected by means of a slipping clutch (38) with a driving means (39), said clutch (38) being provided with means (40) for switching on the fork drive (35) when detecting a given slip in said clutch (38).

0246711

1a
1b
1c
2a
2b
2c
5a
5b
5c
4a
4b
4c

Fig: 1.

10
1
11
12
13
7
9
6
8
10
1''
1
1'
11
α
14
15
6
9

Fig: 2.

Fig: 3.

0246711

1
3
2
α
5
A
4
1''
1'
16''
16'
3
α/2
α/2
C
4
16
1
3
α
B
4
Fig: 4.
16
1
21
22
1
6
18
18
17
17
9
20
19
Fig: 6.
16
1
6
Fig: 5.

1/16
27
22
26
25
25
24
17'
21
35
18'
9'
23
28
39
40
38
37
29
36
32
34
31
33
30
19
6
17'

Fig: 7B.

Fig: 7A.